# EUROPÄISCHE PATENTSCHRIFT

(11) **EP 4 219 273 B1**
(45) Veröffentlichungstag und Bekanntmachung des Hinweises auf die Patenterteilung: **09.10.2024**
(21) Anmeldenummer: 22207133.4
(22) Anmeldetag: 14.11.2022
(51) Int. Cl.: B62D 29/02, B62D 25/14

(54) **FAHRZEUG-STRUKTURBAUTEIL AUS HOLZ UND HERSTELLVERFAHREN**
VEHICLE STRUCTURAL COMPONENT MADE OF WOOD AND PRODUCTION METHOD
COMPOSANT STRUCTUREL EN BOIS POUR VÉHICULE ET PROCÉDÉ DE FABRICATION

(30) Priorität: 28.01.2022 DE 102022101980
(43) Veröffentlichungstag der Anmeldung: 02.08.2023
(73) Patentinhaber: AUDI AG, 85057 Ingolstadt (DE)
(72) Erfinder: Berger, Johann, 84571 Reischach (DE); Thurmeier, Markus, 84166 Adlkofen (DE)

(56) Entgegenhaltungen:
- DE-A1- 102018 120 190
- DE-A1- 102018 202 612
- DE-A1- 4 031 680
- FR-A1- 2 995 865
- GB-A- 205 908
- JP-A- H02 189 251

## Beschreibung

Die vorliegende Erfindung betrifft ein Fahrzeug-Strukturbauteil aus Holz und ein Herstellverfahren für ein solches Fahrzeug-Strukturbauteil.

Ein Fahrzeug-Strukturbauteil der hier betreffenden Art ist ein Kraftfahrzeugbauteil mit erhöhten Steifigkeits- und/oder Festigkeitsanforderungen, wie bspw. ein Träger oder ein Innenverstärkungsteil, welches häufig unsichtbar in der Fahrzeugkarosserie oder einer sonstiges Fahrzeugkomponente verbaut wird. Ein solches Fahrzeug-Strukturbauteil ist heutzutage zumeist aus Metall oder einem Verbundwerkstoff gebildet. Zur Verbesserung der Umwelt- und Klimabilanz werden seit geraumer Zeit aus Holz gefertigte Fahrzeug-Strukturbauteile entwickelt, die auch modernen Anforderungen genügen können.

Aus der DE 10 2018 120 190 A1 ist eine Türinnenstruktur mit integriertem Türaufprallträger bekannt, die insbesondere aus Holz hergestellt sein kann, womit viele Vorteile einhergehen. Ein weitere Beispiel ist aus der DE 40 31 680 A1 bekannt.

Ausgehend von diesem Stand der Technik werden erfindungsgemäß ein Fahrzeug-Strukturbauteil aus Holz mit den Merkmalen des Patentanspruchs 1 und ein Herstellverfahren mit den Merkmalen des nebengeordneten Patentanspruchs vorgeschlagen. Vorteilhafte Weiterbildungen und Ausgestaltungen der Erfindung ergeben sich analog für beide Erfindungsgegenstände aus den abhängigen Patentansprüchen, der nachfolgenden Beschreibung (dies schließt ausdrücklich auch beispielhaft und optional beschriebene Merkmale ein) und den Figuren. Die nachfolgenden Erläuterungen gelten also sinngemäß für beide Erfindungsgegenstände.

Das erfindungsgemäße Fahrzeug-Strukturbauteil ist aus Holz, genau genommen aus Vollholz, gebildet und kann daher auch als Holzstrukturbauteil bzw. Fahrzeug-Holzsstrukturbauteil bezeichnet werden. Es weist einen länglichen, insbesondere trägerartigen, Grundkörper aus Massiv- bzw. Vollholz auf, womit insbesondere ein einstückiger (d. h. an einem Stück hergestellter) bzw. monolithischer Grundkörper gemeint ist. Schicht- bzw. Leimholz, Spanholz und dergleichen sind ausdrücklich kein Vollholz im Sinne der Erfindung. Bevorzugt ist vorgesehen, dass sich die Holzfasern zumindest überwiegend bzw. im Wesentlichen in Längsrichtung des Grundkörpers erstrecken bzw. verlaufen.

Erfindungsgemäß ist dieser Vollholz-Grundkörper mit wenigstens einem durch lokale Verdichtung des Vollholzes gebildeten Krafteinleitungsbereich ausgebildet, der gegenüber wenigstens einem benachbarten Bereich des Grundkörpers, also einem in nächster Nähe oder quasi daneben befindlichen Nachbarbereich, eine (lokal) höhere Festigkeit, d. h. mechanische Material-Festigkeit oder dergleichen, aufweist, insbesondere wenigstens die doppelte Festigkeit. Dieser Krafteinleitungsbereich befindet sich insbesondere an einem axialen Ende des länglichen Grundkörpers.

Bevorzugt ist vorgesehen, dass der Vollholz-Grundkörper mit wenigstens zwei durch lokale Verdichtung des Vollholzes gebildeten Krafteinleitungsbereichen ausgebildet ist, die gegenüber einem jeweils benachbarten Bereich des Grundkörpers eine (lokal) höhere Festigkeit, insbesondere wenigstens die doppelte Festigkeit, aufweisen. Insbesondere sind zwei solcher Krafteinleitungsbereiche vorgesehen, die sich an den axialen Enden des länglichen Grundkörpers befinden.

Die lokale, d. h. örtlich begrenzte, Verdichtung in einem solchen Krafteinleitungsbereich ist vorzugsweise quer zur Längsrichtung bzw. -erstreckung des Grundkörpers, insbesondere auch quer zum Faserverlauf der Holzfasern, ausgebildet, wobei der Krafteinleitungsbereich (gegenüber dem benachbarten Bereich) bevorzugt auch einen kleineren Querschnitt aufweist.

Ein solcher Krafteinleitungsbereich kann zusätzlich zur Verdichtung auch imprägniert sein. Damit ist insbesondere gemeint, dass das Vollholz bzw. das Vollholzmaterial (im Folgenden auch nur als Holzmaterial bezeichnet) mit einer Imprägnier-Substanz oder Ähnlichem behandelt ist, welche vorzugsweise in das Holzmaterial eingedrungen ist. Durch eine solche Imprägnierung kann bspw. die Festigkeit erhöht, die Entzündbarkeit verringert und/oder das Feuchtigkeitsaufnahmevermögen reduziert werden. Bevorzugt ist nur in den Krafteinleitungsbereichen, sowie gegebenenfalls auch in den Festigkeitsübergangsbereichen (s. u.), eine Imprägnierung vorgesehen. Bevorzugt wird die Imprägnier-Substanz vor dem Verdichten aufgebracht, wie nachfolgend noch näher erläutert.

Ferner ist erfindungsgemäß vorgesehen, dass wenigstens ein Übergang zwischen einem solchen mit höherer Festigkeit ausgebildeten Krafteinleitungsbereich und einem mit geringerer Festigkeit ausgebildeten benachbarten Bereich bzw. Nachbarbereich als Festigkeitsübergangsbereich mit einem kontinuierlichen und/oder stufenweisen Festigkeitsübergang ausgebildet ist. Ein solcher Festigkeitsübergangsbereich kann auch als Festigkeitsübergangszone bezeichnet werden. Dadurch werden Festigkeitssprünge vermieden oder zumindest vermindert.

Teilweise beziehen sich die nachfolgenden Erläuterungen auf einen Festigkeitsübergangsbereich, wobei die betreffenden Erläuterungen allgemeingültig sein sollen und auch für Ausführungsformen mit mehreren Festigkeitsübergangsbereichen gelten, die im Rahmen der Erfindung identisch oder unterschiedlich ausgestaltet sein können. So können bspw. auch zwei Festigkeitsübergangsbereiche vorgesehen sein, die einen Krafteinleitungsbereich mit jeweils einem benachbarten Bereich verbinden. Ferner kann ein erfindungsgemäßes Fahrzeug-Strukturbauteil mehrere (durch lokale Verdichtung des Vollholzes gebildete) Krafteinleitungsbereiche aufweisen, insbesondere wenigstens zwei Krafteinleitungsbereiche (s. o.), die identisch oder auch unterschiedlich ausgestaltet sein können. Bevorzugt ist dann vorgesehen, dass die Übergänge zwischen diesen Krafteinleitungsbereichen mit höherer Festigkeit und jeweils wenigstens einem benachbarten Bereich mit geringerer Festigkeit als Festigkeitsübergangsbereiche mit einem kontinuierlichen und/oder stufenweisen Festigkeitsübergang ausgebildet sind.

Bevorzugt ist vorgesehen, dass sich innerhalb des Festigkeitsübergangsbereichs die Festigkeit kontinuierlich, d. h. quasi fließend (ohne Sprünge), und/oder stufenweise, vorzugsweise in mehreren Festigkeitsstufen (d. h. in wenigstens zwei Stufen), verändert, insbesondere bezüglich der Längsrichtung des Grundkörpers. Dadurch werden abrupte bzw. sprunghafte Festigkeitsübergänge vermieden oder zumindest vermindert. Ein kontinuierlicher Festigkeitsübergang ist mit einem stufenweisen Festigkeitsübergang kombinierbar. Bei einem stufenweisen Festigkeitsübergang ist bevorzugt vorgesehen, dass sich benachbarte Festigkeitsstufen bzw. Abschnitte in ihrer Festigkeit um mindestens 10 % unterscheiden. Der Festigkeitsübergangsbereich kann (bezüglich der Längsrichtung des Grundkörpers) eine Länge von 10 mm bis 100 mm, vorzugsweise von 20 mm bis 75 mm, insbesondere von 30 mm bis 60 mm, aufweisen.

Bevorzugt ist in dem Festigkeitsübergangsbereich durch geometrische Anpassung und/oder durch Anpassung der Holzstruktur bzw. -beschaffenheit ein Festigkeitsübergang, insbesondere ein kontinuierlicher und/oder stufenweiser Festigkeitsübergang ausgebildet. Mit anderen Worten: im Festigkeitsübergangsbereich kann ein Festigkeitsübergang, insbesondere ein kontinuierlicher und/oder stufenweiser Festigkeitsübergang, durch eine geometrische Anpassung und/oder durch eine Anpassung der Holzstruktur erfolgen. Mit einer geometrischen Anpassung ist insbesondere eine spezielle Formgebung gemeint, bspw. in Form einer gestuften, verrundeten und/oder rampenartigen Übergangskontur, um einen typischerweise querschnittskleineren Krafteinleitungsbereich mit einem benachbarten querschnittsgrößeren Bereich zu verbinden. Mit einer Anpassung der Holzstruktur ist insbesondere eine variable Verdichtung und/oder Imprägnierung des Vollholzes bzw. des Holzmaterials gemeint, d. h. innerhalb des Festigkeitsübergangsbereichs ist eine unterschiedliche Verdichtung und/oder Imprägnierung vorgesehen. Beide Maßnahmen sind ausdrücklich miteinander kombinierbar.

Der Krafteinleitungsbereich ist/wird bevorzugt durch Aufbringung, insbesondere durch nur lokale Aufbringung, eines äußeren Pressdrucks mittels geeignetem Pressverfahren erzeugt. Bevorzugt ist/wird auch der Festigkeitsübergangsbereich durch Aufbringung, insbesondere durch nur lokale Aufbringung, eines äußeren Pressdrucks mittels geeignetem Pressverfahren erzeugt. Für das Aufbringen des Pressdrucks wird bevorzugt ein Presswerkzeug verwendet, welches insbesondere derart ausgebildet ist, dass zumindest ein Krafteinleitungsbereich und wenigstens ein zugehöriger Festigkeitsübergangsbereich gleichzeitig erzeugt werden können.

Der Krafteinleitungsbereich kann wenigstens ein eingeformtes Loch aufweisen, welches insbesondere als Befestigungsloch fungiert. Bevorzugt wird dieses Loch beim Erzeugen des Krafteinleitungsbereichs (durch Verdichten des Vollholzes; s. o.) miterzeugt, bspw. mithilfe eines Dorns. Ein spanender Bohrvorgang ist nicht vorgesehen, sodass die Holzstruktur nicht beschädigt bzw. die Holzfasern nicht unterbrochen werden. Zur Verstärkung kann zusätzlich eine Metallöse oder dergleichen in das eingeformte Loch eingepresst werden.

Am Grundkörper können zusätzliche Funktionselemente angeordnet sein, die sich insbesondere außerhalb von Krafteinleitungsbereichen und Festigkeitsübergangsbereichen befinden. Hierbei handelt es sich bspw. um Befestigungselemente, Verbindungselemente, Stützelemente, Halteelemente, Versteifungselemente, Abstandshalter etc. Bevorzugt sind/werden diese zusätzliche Funktionselemente durch direktes Anspritzen eines Kunststoffs, insbesondere eines faserverstärkten Kunststoffs, an das Holzmaterial des Grundkörpers erzeugt, d. h., bei den Funktionselementen handelt es sich um direkt angespritzte Spritzgusselemente, deren Festigkeit aber bevorzugt unterhalb der Festigkeit eines aus Holz gebildeten Krafteinleitungsbereichs liegt. Der Grundkörper kann in den betreffenden Bereichen mit Vertiefungen, insbesondere eingeformten Vertiefungen, oder dergleichen ausgebildet sein, um eine formschlüssige Anbindung des angespritzten Kunststoffs zu erreichen.

Das erfindungsgemäße Holzstrukturbauteil ist insbesondere als Instrumententafelquerträger eines Kraftfahrzeugs ausgebildet. Mit anderen Worten: bei dem erfindungsgemäßen Holzstrukturbauteil handelt es sich bevorzugt um einen Instrumententafelquerträger, wie bspw. auch in den Figuren gezeigt. Zum diesbezüglichen Stand der Technik wird bspw. auf die DE 10 2008 021 103 A1, DE 20 2011 110 441 U1 und EP 2 499 038 B1 verwiesen. Das erfindungsgemäße Holzstrukturbauteil kann aber bspw. auch ein Getriebeträger sein.

Das erfindungsgemäße Verfahren bzw. Herstellverfahren ermöglicht die Herstellung eines Fahrzeug-Strukturbauteils aus Holz, welches einen länglichen Grundkörper aus Vollholz mit wenigstens einem durch lokale Verdichtung des Vollholzes bzw. Holzmaterials gebildeten Krafteinleitungsbereich mit höherer Festigkeit aufweist, sowie gegebenenfalls auch wenigstens einen (zugehörigen) Festigkeitsübergangsbereich. Bevorzugt handelt es sich bei dem herzustellenden bzw. hergestellten Bauteil um ein erfindungsgemäßes Fahrzeug-Strukturbauteil und insbesondere um einen Instrumententafelquerträger. Die vorausgehenden Erläuterungen gelten analog für das Verfahren.

Das erfindungsgemäße Verfahren umfasst zumindest folgende, insbesondere in dieser Reihenfolge auszuführende Schritte:
- Bereitstellen eines vorgefertigten, insbesondere auch vorsortierten, länglichen Holzstücks aus Vollholz, aus dem der Grundkörper gefertigt werden soll;
- Erzeugen des Krafteinleitungsbereichs durch Aufbringen, insbesondere durch nur lokales Aufbringen, äußeren Pressdrucks auf das Holzstück (in einem sogenannten Pressvorgang), wodurch das Vollholz bzw. das Holzmaterial in dem betreffenden Bereich verdichtet und dadurch dessen Festigkeit (lokal) erhöht wird;
- gegebenenfalls Anbringen, insbesondere Anspritzen, zusätzlicher Funktionselemente, wie oben beschrieben;
- gegebenenfalls Oberflächenbehandeln des Grundkörpers, wobei dies auch vor dem Anbringen von Funktionselementen erfolgen kann, und/oder Aufbringen, insbesondere Aufleimen, wenigstens einer Schichtholzlage, was insbesondere der Aufwertung bzw. Veredelung dient, und/oder Aufbringen wenigstens einer Kunststoff- und/oder Faserverbundlage, was insbesondere der Aufwertung bzw. Veredelung und/oder der Festigkeitssteigerung dient. Insbesondere ist eine spanende Holzbearbeitung nicht vorgesehen, mit Ausnahme einer eventuell erforderlichen Längenanpassung.

Bevorzugt erstrecken sich die Holzfasern des länglichen Holzstücks zumindest überwiegend bzw. im Wesentlichen in Längsrichtung des Holzstücks. Bei dem Holzstück handelt es bevorzugt um ein Schnittholz, Kantholz oder dergleichen, das insbesondere als Halbzeug bereitgestellt wird.

Die erzeugten Krafteinleitungsbereiche können eine homogene Festigkeit oder eine variable Festigkeit, d. h. eine unterschiedliche bzw. sich örtlich unterscheidende Festigkeit, aufweisen.

Das Verdichten erfolgt bevorzugt mithilfe eines Presswerkzeugs, in welches das Holzstück ganz oder teilweise eingelegt wird. Das Presswerkzeug kann in einer Presse, einer Schließvorrichtung oder dergleichen eingebaut sein. Mithilfe des Presswerkzeugs wird dann ein äußerer Pressdruck (s. u.) auf das Holzmaterial aufgebracht. Es kann vorgesehen sein, dass das Holzstück im Ganzen verdichtet und dabei gegebenenfalls auch verformt bzw. gebogen wird (bspw. zur Ausformung einer Krümmung), wobei dann der wenigstens eine Krafteinleitungsbereich und gegebenenfalls wenigstens eine Festigkeitsübergangsbereich quasi überverdichtet werden.

Beim Erzeugen des wenigstens einen Krafteinleitungsbereichs wird bevorzugt, quasi gleichzeitig im selben Arbeitsgang bzw. Fertigungsschritt, auch wenigstens ein Festigkeitsübergangsbereich miterzeugt, wobei der betreffende Bereich des Holzstücks vorzugsweise variabel verdichtet wird, sodass innerhalb des betreffenden Bereichs eine unterschiedliche bzw. sich örtlich unterscheidende Verdichtung erzeugt wird. Insbesondere ist ein dafür verwendetes Presswerkzeug entsprechend ausgebildet und weist bspw. mehrere Werkzeugsegmente auf, mit denen lokal bzw. bereichsweise unterschiedliche Pressdrücke (partielle Pressdrücke) aufgebracht werden können. Ferner kann gleichzeitig in wenigstens einen Krafteinleitungsbereich auch wenigstens ein Loch eingeformt werden. Das zum Verpressen bzw. Verdichten verwendete Presswerkzeug kann hierfür bspw. mit wenigstens einem Dorn oder dergleichen ausgebildet sein.

Zumindest ein dem Krafteinleitungsbereich entsprechender Bereich des Holzstücks kann vor dem Verdichten mit einem Befeuchtungsmittel (bspw. Wasser oder Wasserdampf) befeuchtet werden (in einem sogenannten Befeuchtungsvorgang) und/oder mit einer Imprägnier-Substanz behandelt werden (in einem sogenannten Imprägniervorgang). Der betreffende Bereiche bzw. die betreffenden Bereiche des Holzstücks kann/können bspw. besprüht oder in ein Bad bzw. Becken eingetaucht werden. Selbiges gilt analog für wenigstens einen Festigkeitsübergangsbereich. Der betreffende Bereiche bzw. die betreffenden Bereiche kann/können auch variabel befeuchtet und/oder imprägniert werden, insbesondere derart, dass innerhalb eines betreffenden Bereichs ein unterschiedlicher Feuchtgehalt bzw. Imprägniermittelgehalt, also eine unterschiedliche Imprägnierung, erzeugt wird.

Bevorzugt ist vorgesehen, dass das bereitgestellte Holzstück, zumindest in wenigstens einem einem Krafteinleitungsbereich entsprechenden Bereich bzw. Abschnitt sowie gegebenenfalls auch in wenigstens einem einem Festigkeitsübergangsbereich entsprechenden Bereich bzw. Abschnitt, geprüft wird und basierend auf dabei erfassten Werten ein nachfolgender Befeuchtungsvorgang, Imprägniervorgang und/oder Pressvorgang gesteuert bzw. eingestellt wird. Beim Prüfen des Holzstücks können individuelle Eigenschaften wie bspw. dessen Faserverlauf (insbesondere in Hinblick auf Unregegelmäßigkeiten und Einschlüsse), Temperatur, Dichte und/oder Holzfeuchte bzw. Holzfeuchtigkeit erfasst werden, wobei insbesondere entsprechende Werte ermittelt werden. Ferner können auch Umgebungsbedingungen, wie bspw. die Raumtemperatur und Luftfeuchtigkeit, und/oder sonstige Produktionsbedingungen erfasst und beim Befeuchtungsvorgang, Imprägniervorgang und/oder Pressvorgang berücksichtigt werden. Der Befeuchtungsvorgang, Imprägniervorgang und/oder Pressvorgang kann dann individuell auf die Eigenschaften bzw. Beschaffenheit des jeweiligen Holzstücks abgestimmt werden, bspw. durch Anpassen bzw. Einstellen von Menge, Temperatur und/oder Einwirkzeit des Befeuchtungsmittels bzw. der Imprägnier-Substanz sowie durch Anpassen bzw. Einstellen von Pressdruck, insbesondere partiellem Pressdruck, Presszeit und/oder Presstemperatur, insbesondere partieller Presstemperatur, für jeden betreffenden Bereich bzw. Abschnitt. Das Prüfen und Steuern bzw. Einstellen erfolgen bevorzugt automatisch in einem mittels künstlicher Intelligenz geführten Prozess (KI-Prozess). Aufgrund der Prüfung kann ein ungeeignetes Holzstück auch aussortiert werden.

Ferner können basierend auf einer Prüfung des Holzstücks auch für die Krafteinleitungsbereiche und/oder Festigkeitsübergangsbereiche besonders geeignete Bereiche bzw. Abschnitte ausgewählt oder die Lage der betreffenden Bereiche bzw. Abschnitte variiert werden, wobei dann gegebenenfalls anschließend noch eine entsprechende Längenanpassung des Holzstücks erforderlich ist (das Holzstück kann Überlänge aufweisen oder ein unkonfektioniertes Halbzeug sein). Bevorzugt weist das bereitgestellte Holzstück aber bereits eine dem Grundkörper des herzustellenden Fahrzeug-Strukturbauteils entsprechende (axiale) Länge auf, sodass im Weiteren keine Längenanpassung mehr erforderlich ist.

Ferner können für den Befeuchtungsvorgang, Imprägniervorgang und/oder Pressvorgang auch fahrzeugspezifische Vorgaben berücksichtigt und analog zu den vorausgehenden Erläuterungen eine entsprechende Steuerung bzw. Einstellung vorgenommen werden. Dies ermöglicht eine abwechselnde Herstellung verschiedener Fahrzeug-Strukturbauteile bzw. verschiedener Varianten von Fahrzeug-Strukturbauteilen, wie bspw. Instrumententafelquerträger für verschiedene Fahrzeugtypen, in derselben Produktionsanlage.

Die Erfindung wird nachfolgend in nicht einschränkender Weise anhand der schematischen Figuren näher erläutert. Außerdem können Merkmale verschiedener Ausführungsmöglichkeiten zu weiteren Ausführungsmöglichkeiten kombiniert werden.
- Fig. 1: zeigt ein Fahrzeug-Strukturbauteil aus Holz mit zwei Krafteinleitungsbereichen.
- Fig. 2: zeigt eine erste Ausführungsmöglichkeit eines Krafteinleitungsbereichs am Fahrzeug-Strukturbauteil der Fig. 1.
- Fig. 3: zeigt eine zweite Ausführungsmöglichkeit eines Krafteinleitungsbereichs am Fahrzeug-Strukturbauteil der Fig. 1.
- Fig. 4: zeigt eine dritte Ausführungsmöglichkeit eines Krafteinleitungsbereichs am Fahrzeug-Strukturbauteil der Fig. 1.
- Fig. 5: veranschaulicht ein Presswerkzeug und einen Pressvorgang zum Erzeugen eines Krafteinleitungsbereichs gemäß Fig. 4.
- Fig. 6: veranschaulicht mehrere Schritte eines Verfahrens zum Herstellen des Fahrzeug-Strukturbauteils aus Fig. 1.

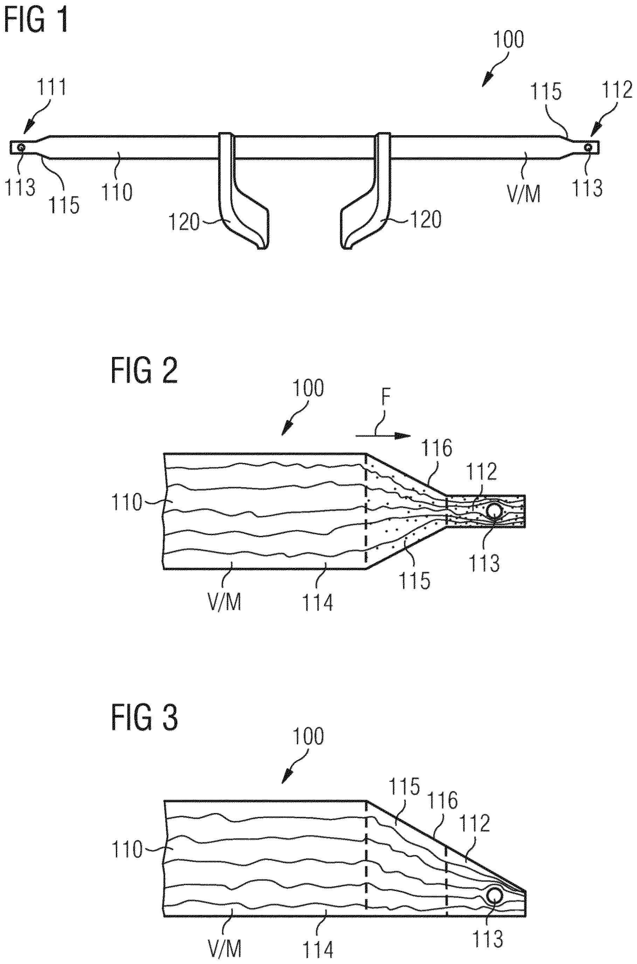

Bei dem in Fig. 1 gezeigten Fahrzeug-Strukturbauteil 100 handelt es sich beispielhaft um einen Instrumententafelquerträger. Das Fahrzeug-Strukturbauteil bzw. der Instrumententafelquerträger 100 weist einen länglichen Grundkörper 110 auf, der einstückig aus massivem Vollholz V gebildet ist und bspw. einen runden oder mehreckigen, insbesondere rechteckigen, Querschnitt aufweisen kann. Der Grundkörper 110 ist an seinen axialen Enden mit jeweils einem Krafteinleitungsbereich 111, 112 ausgebildet, in denen das Vollholz V bzw. das Vollholzmaterial M aufgrund von Verdichtung eine lokal höhere Festigkeit aufweist. Die Krafteinleitungsbereiche 111, 112 fungieren als Befestigungs- bzw. Anbindungsabschnitte zur Befestigung des Strukturbauteils 100 an der Fahrzeugkarosserie (bspw. an den A-Säulen) und weisen hierzu auch jeweils wenigstens ein eingeformtes Loch bzw. Befestigungsloch 113 auf, das bspw. eine Verschraubung ermöglicht. Der Grundkörper 110 kann weitere derartige Krafteinleitungsbereiche aufweisen.

Fig. 2 veranschaulicht exemplarisch anhand des rechtsseitigen Krafteinleitungsbereichs 112 am Fahrzeug-Strukturbauteil 100 der Fig. 1 eine erste Ausführungsmöglichkeit. Der andere Krafteinleitungsbereich 111 bzw. das andere axiale Ende des Grundkörpers 110 kann identisch bzw. spiegelsymmetrisch ausgebildet sein. D. h., die nachfolgenden Erläuterungen und Betrachtungen sind ohne Einschränkungen allgemeingültig.

Zwischen dem mit höherer Festigkeit ausgebildeten Krafteinleitungsbereich 112 und dem mit einer vergleichweise geringeren Festigkeit ausgebildeten benachbarten Bereich 114 des Grundkörpers 110 befindet sich ein als Festigkeitsübergangsbereich bzw. Festigkeitsübergangszone 115 ausgebildeter Übergang, der gewissermaßen zum Krafteinleitungsbereich 112 gehört und diesen verdichteten Krafteinleitungsbereich 112 mit dem unverdichteten oder geringer verdichteten Nachbarbereich 114 verbindet. D. h., zwischen den benachbarten Bereichen 112, 114 befindet sich exakt ein Festigkeitsübergangsbereich 115, sodass die beiden benachbarten Bereiche 112, 114 nicht direkt, sondern nur indirekt über den Festigkeitsübergangsbereich 115 aneinander angrenzen. Zur Verdeutlichung sind die einzelnen, sich in ihren mechanische Eigenschaften unterscheidenden Bereiche durch strichlinierte Linen unterteilt, wobei die dargestellten Linienverläufe lediglich einer vereinfachten Anschauung dienen sollen.

Innerhalb des Festigkeitsübergangsbereichs 115 erfolgt ein Festigkeitsübergang, derart, dass die Material-Festigkeit F oder ähnliche mechanische Eigenschaften des Holzmaterials M (wie bspw. die Steifigkeit oder Härte) in Richtung des Krafteinleitungsbereichs 112 kontinuierlich und/oder stufenweise ansteigt bzw. zunimmt, wie mit dem Pfeil veranschaulicht. Dies erfolgt hier durch eine geometrische Anpassung in Form einer mehrseitigen oder über den Umfang ausgebildeten rampenartigen Übergangskontur 116 zwischen den benachbarten Bereichen 112, 114.

Bevorzugt sind/werden sowohl der Krafteinleitungsbereich 112 als auch der Festigkeitsübergangsbereich 115 durch Aufbringen eines äußeren Pressdrucks (bzw. partieller äußerer Pressdrücke) erzeugt, wie nachfolgend noch näher erläutert. D. h., der Festigkeitsübergangsbereich 115 ist nicht bloße Folge der lokalen Verdichtung des Holzmaterials M im Krafteinleitungsbereich 112, sondern wird gezielt mit vorgesehenen Eigenschaften erzeugt bzw. miterzeugt.

Innerhalb des Festigkeitsübergangsbereichs 115 besteht auch eine variable Verdichtung des Holzmaterials M, derart, dass in Pfeilrichtung mit kleiner werdenden Querschnitten die Verdichtung und Festigkeit zunehmen bzw. ansteigen. D. h., zusätzlich zur geometrischen Anpassung ist auch eine Anpassung der Holzstruktur vorgesehen, derart, dass innerhalb des Festigkeitsübergangsbereichs 115 eine variable Verdichtung ausgebildet ist. Ferner kann vorgesehen sein, dass auch eine variable Imprägnierung des Holzmaterials M ausgebildet ist (veranschaulicht durch die Punkte). D. h., der Festigkeitsübergangsbereich 115 kann eine sich über der Länge (in Richtung der Längserstreckung des Grundkörpers 110) und/oder über den Querschnitt verändernde Dichte und/oder Imprägnierung aufweisen, wodurch abhängig von der konkreten Ausgestaltung ein kontinuierlicher und/oder stufenweiser, d. h. mehrere Festigkeitsstufen umfassender, Festigkeitsübergang ausgebildet ist.

Der Festigkeitsübergangsbereich 115 kann, gegebenenfalls bei anderer geometrischer Ausgestaltung, auch mit einer im Wesentlichen homogenen Festigkeit ausgebildet sein, die zwischen der höheren Festigkeit des Krafteinleitungsbereichs 112 und der niedrigeren Festigkeit des benachbarten Bereichs 114 liegt, sodass der Festigkeitsübergangsbereich 115 quasi eine Zwischenfestigkeitsstufe bildet.

Fig. 3 veranschaulicht analog zur Fig. 2 eine andere Ausführungsmöglichkeit mit einer vorzugsweise nur einseitig ausgebildeten rampenartigen Übergangskontur 116, welche, insbesondere kontinuierlich, die Formgebung des Krafteinleitungsbereichs 112 fortsetzt. Ansonsten gelten sinngemäß die Erläuterungen zur Ausführungsmöglichkeit der Fig. 2.

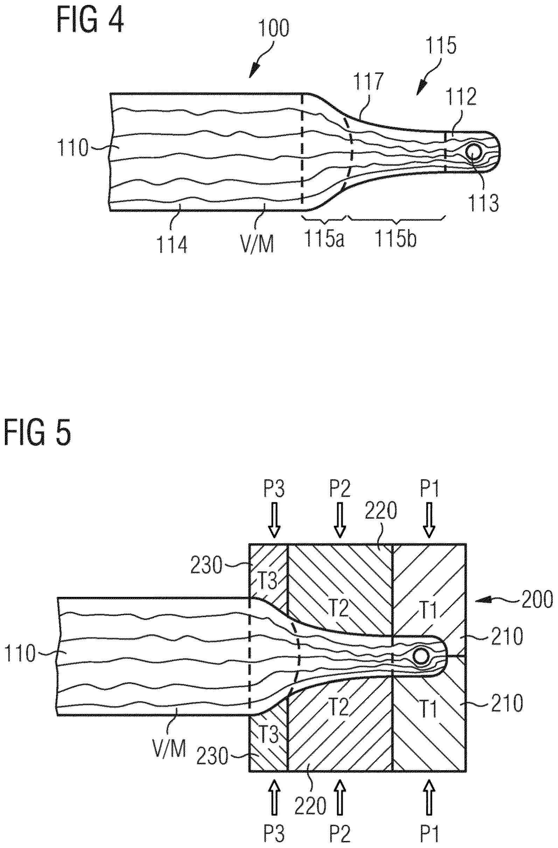

Fig. 4 veranschaulicht analog zur Fig. 2 eine andere Ausführungsmöglichkeit, bei der der Festigkeitsübergangsbereich 115 mit einer verrundeten Übergangskontur 117 ausgebildet ist. Ferner umfasst der Festigkeitsübergangsbereich 115 zwei sich in ihrer Festigkeit bzw. in ihrem Festigkeitsverlauf unterscheidende Teilbereiche 115a, 115b, also quasi zwei Festigkeitsstufen bzw. -abschnitte. Die beiden Teilbereiche 115a, 115b sind mehr oder weniger ineinandergeschachtelt, wie durch die bogenförmige Trennlinie veranschaulicht, wodurch sich eine über dem Querschnitt verändernde Festigkeit ergibt. Ansonsten gelten sinngemäß die Erläuterungen zur Ausführungsmöglichkeit der Fig. 2.

Fig. 5 veranschaulicht exemplarisch anhand der in Fig. 4 gezeigten Ausführungsmöglichkeit einen Pressvorgang zum Erzeugen des Krafteinleitungsbereichs 112 und des zugehörigen Festigkeitsübergangsbereichs 115 durch lokales Verdichten des Vollholzes V bzw. Holzmaterials M mithilfe eines Presswerkzeugs 200. Das Presswerkzeug 200 ist segmentiert ausgebildet und weist mehrere, jeweils mehrfach vorhandene Werkzeugsegmente 210, 220, 230 auf, mit denen lokal, also bereichs- bzw. abschnittsweise, unterschiedliche äußere Pressdrücke P1, P2, P3 aufgebracht werden können, wobei insbesondere gilt: P1 > P2 > P3. Die Pressdrücke P1, P2, P3 können auch als partielle Pressdrücke bezeichnet werden. Bevorzugt können die mit den Werkzeugsegmenten 210, 220, 230 aufgebrachten partiellen Pressdrücke P1, P2, P3 auch variiert bzw. eingestellt werden, wodurch der Pressvorgang individuell abgestimmt werden kann. Insbesondere können durch Variieren der Pressdrücke P2 und/oder P3 die Eigenschaften des Festigkeitsübergangsbereichs 115 gezielt eingestellt werden.

Das Verpressen des Vollholzes V bzw. Holzmaterials M kann bei entsprechender Ausgestaltung des Presswerkzeugs 200 derart erfolgen, dass die ursprüngliche Querschnittsform des Grundkörpers 110 erhalten bleibt und quasi nur eine Skalierung auf kleinere Querschnitte erfolgt. Bevorzugt ist jedoch vorgesehen, dass beim Pressvorgang bzw. beim Verpressen auch eine Veränderung der Querschnittsform erfolgt, sodass der Krafteinleitungsbereich 112 zumindest teilweise eine andere Querschnittsform als der benachbarte Bereich 114 aufweist, wobei der Festigkeitsübergansbereich 115 einen Formübergang bilden kann.

Die Werkzeugsegmente 210, 220, 230 des Presswerkzeugs 200 können ferner mit nicht gezeigten Heizeinrichtungen ausgebildet sein, mit denen jeweils eine bestimmte Presstemperatur herbeigeführt werden kann. Bevorzugt ist vorgesehen, dass diese Heizeinrichtungen unabhängig voneinander gesteuert bzw. eingestellt werden können. Insbesondere können die mit den Werkzeugsegmenten 210, 220, 230 aufgebrachten partiellen Presstemperaturen T1, T2, T3 variiert bzw. eingestellt werden, wodurch der Pressvorgang auch hinsichtlich der Presstemperatur individuell abgestimmt werden kann.

Zum Verpressen bzw. Verdichten kann grundsätzlich auch ein unsegmentiertes Presswerkzeug, insbesondere mit einer oder mehreren Heizeinrichtungen, verwendet werden. Ein Presswerkzeug kann außerdem so ausgebildet sein, dass ein zu bearbeitendes Holzstück im Ganzen eingelegt werden kann, sodass bspw. die beiden in Fig. 1 gezeigten Krafteinleitungsbereiche 111, 112 gleichzeitig erzeugt werden können.

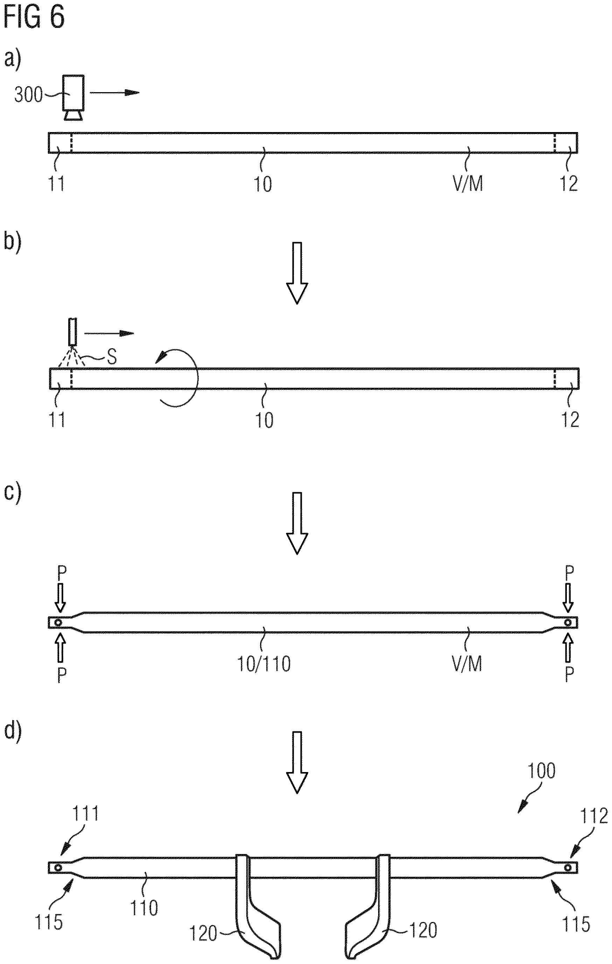

Fig. 6 veranschaulicht mehrere Schritte eines bevorzugten Verfahrens zur Herstellung des Fahrzeug-Strukturbauteils 100, aufweisend die Schritte:
- Bereitstellen eines vorgefertigten länglichen Holzstücks 10 aus Vollholz V;
- Prüfen des Holzstücks 10, zumindest in den den zu erzeugenden Krafteinleitungsbereichen 111, 112, insbesondere einschließlich der Festigkeitsübergangsbereiche 115, entsprechenden Bereichen 11,12, wobei mittels geeigneter Sensoren (wie bspw. Kamera 300, Temperatursensor, Feuchtigkeitssensor etc.) relevante Eigenschaften (bspw. Faserverlauf, Temperatur, Dichte und/oder Holzfeuchte) des Holzstücks 10 erfasst werden, wie in Fig. 6a dargestellt;
- eventuell Ausführen eines Befeuchtungs- und/oder Imprägniervorgangs, wobei zumindest die Bereiche 11,12 des Holzstücks 10 mit einem Befeuchtungsmittel bzw. einer Imprägnier-Substanz S oder Ähnlichem behandelt werden, insbesondere individuell basierend auf den zuvor erfassten Eigenschaften, wie in Fig. 6b dargestellt;
- Ausführen wenigstens eines Pressvorgangs, bspw. mithilfe des in Fig. 5 gezeigten Presswerkzeugs 200 (s. o.), wobei das Vollholz V bzw. Holzmaterial M wenigstens in den Bereichen 11,12 des Holzstücks 10 durch Aufbringen eines äußeren Pressdrucks P (bzw. partieller Pressdrücke P1, P2, P3) lokal verdichtet und dadurch die Krafteinleitungsbereiche 111, 112 sowie insbesondere gleichzeitig auch die Festigkeitsübergangsbereiche 115 erzeugt werden, insbesondere individuell basierend auf den zuvor erfassten Eigenschaften, wie in Fig. 6c dargestellt;
- eventuell Anbringen zusätzlicher Funktionselemente 120 (siehe Fig. 1 und Fig. 6d), insbesondere durch direktes Anspritzen eines Kunststoffmaterials an den Grundkörper 110.

Die Löcher 113 in den Krafteinleitungsbereichen 111, 112 können während des Pressvorgangs bzw. beim Verpressen mit eingeformt werden, wie obenstehend erläutert. Optional können dann noch Verstärkungsösen, insbesondere metallische Verstärkungsösen, oder dergleichen in die Löcher 113 eingesetzt werden.

## Patentansprüche

1. Fahrzeug-Strukturbauteil (100) aus Holz, mit einem länglichen Grundkörper (110) aus Vollholz (V), der wenigstens einen durch lokale Verdichtung des Vollholzes (V) gebildeten Krafteinleitungsbereich (111, 112) mit höherer Festigkeit aufweist, wobei wenigstens ein Übergang zwischen diesem Krafteinleitungsbereich (111, 112) mit höherer Festigkeit und einem benachbarten Bereich (114) mit geringerer Festigkeit als Festigkeitsübergangsbereich (115) mit einem kontinuierlichen und/oder stufenweisen Festigkeitsübergang ausgebildet ist.

2. Fahrzeug-Strukturbauteil (100) nach Anspruch 1,
**dadurch gekennzeichnet, dass**
im Festigkeitsübergangsbereich (115) durch geometrische Anpassung und/oder durch Anpassung der Holzstruktur ein kontinuierlicher und/oder stufenweiser Festigkeitsübergang ausgebildet ist.

3. Fahrzeug-Strukturbauteil (100) nach einem der vorherigen Ansprüche, **dadurch gekennzeichnet, dass**
der Krafteinleitungsbereich (111, 112) und der Festigkeitsübergangsbereich (115) durch Aufbringung äußeren Pressdrucks (P) erzeugt sind.

4. Fahrzeug-Strukturbauteil (100) nach einem der vorherigen Ansprüche, **dadurch gekennzeichnet, dass**
der Krafteinleitungsbereich (111, 112) wenigstens ein eingeformtes Loch (113) aufweist.

5. Fahrzeug-Strukturbauteil (100) nach einem der vorherigen Ansprüche, **dadurch gekennzeichnet, dass**
am Grundkörper (110) durch direktes Anspritzen eines Kunststoffs erzeugte zusätzliche Funktionselemente (120) angeordnet sind.

6. Fahrzeug-Strukturbauteil (100) nach einem der vorherigen Ansprüche, **dadurch gekennzeichnet, dass**
dieses als Instrumententafelquerträger eines Kraftfahrzeugs ausgebildet ist.

7. Verfahren zum Herstellen eines Fahrzeug-Strukturbauteils (100) aus Holz, das einen länglichen Grundkörper (110) aus Vollholz (V) mit wenigstens einem durch lokale Verdichtung des Vollholzes (V) gebildeten Krafteinleitungsbereich (111, 112) mit höherer Festigkeit aufweist, wobei das Verfahren folgende Schritte umfasst:
- Bereitstellen eines vorgefertigten länglichen Holzstücks (10) aus Vollholz (V), aus dem der Grundkörper (110) gefertigt werden soll;
- Erzeugen des Krafteinleitungsbereichs (111, 112) durch Aufbringen äußeren Pressdrucks (P), wodurch das Vollholz (V) in dem betreffenden Bereich (11, 12) verdichtet und dadurch dessen Festigkeit erhöht wird.

8. Verfahren nach Anspruch 7,
**dadurch gekennzeichnet, dass**
zumindest ein dem Krafteinleitungsbereich (111, 112) entsprechender Bereich (11, 12) des Holzstücks (10) vor dem Verdichten mit einer Imprägnier-Substanz (S) behandelt wird.

9. Verfahren nach Anspruch 7 oder 8,
**dadurch gekennzeichnet, dass**
das bereitgestellte Holzstück (10), zumindest in einem dem Krafteinleitungsbereich (111, 112) entsprechenden Bereich (11, 12), geprüft wird und basierend auf dabei erfassten Werten der Imprägniervorgang und/oder der Pressvorgang gesteuert wird.

10. Verfahren nach Anspruch 9,
**dadurch gekennzeichnet, dass**
beim Prüfen des Holzstücks (10) dessen Faserverlauf, Temperatur, Dichte und/oder Holzfeuchte erfasst wird.

## Claims

1. Vehicle structural component (100) made of wood, with an elongated base body (110) made of solid wood (V), which has at least one force introduction region (111, 112) which is formed by local compression of the solid wood (V) and which has a higher strength, wherein at least one transition between this force introduction region (111, 112) of higher strength and an adjacent region (114) of lower strength is formed as a strength transition region (115) with a continuous and/or step-wise strength transition.

2. Vehicle structural component (100) according to claim 1,
**characterised in that**
a continuous and/or step-wise strength transition is formed in the strength transition region (115) by geometric adaptation and/or by adaptation of the wood structure.

3. Vehicle structural component (100) according to any one of the preceding claims, **characterised in that**
the force introduction region (111, 112) and the strength transition region (115) are generated by applying external compressive pressure (P).

4. Vehicle structural component (100) according to any one of the preceding claims, **characterised in that**
the force introduction region (111, 112) has at least one moulded hole (113).

5. Vehicle structural component (100) according to any one of the preceding claims, **characterised in that**
additional functional elements (120) which are generated by direct injection-moulding of a plastic are arranged on the base body (110).

6. Vehicle structural component (100) according to any one of the preceding claims, **characterised in that**
it is designed as an instrument panel crossbeam of a motor vehicle.

7. Method for producing a vehicle structural component (100) made of wood, having an elongated base body (110) made of solid wood (V), with at least one force introduction region (111, 112) which is formed by local compression of the solid wood (V) with a higher strength, wherein the method comprises the following steps:
- providing a prefabricated elongated piece of wood (10) made of solid wood (V), from which the base body (110) is to be made;
- Generating the force application region (111, 112) by applying external compressive pressure (P), whereby the solid wood (V) is compressed in the relevant region (11, 12) and its strength is increased as a result.

8. Method according to claim 7,
**characterised in that**
at least one region (11, 12) of the piece of wood (10) corresponding to the force introduction region (111, 112) is treated with an impregnating substance (S) before being compressed.

9. Method according to claim 7 or 8,
**characterised in that**
the provided piece of wood (10) is inspected, at least in a region (11, 12) corresponding to the force introduction region (111, 112), and on the basis of the values recorded in the process, the impregnation process and/or the pressing process is controlled.

10. Method according to claim 9,
**characterised in that**
during the inspection of the piece of wood (10), its fibre orientation, temperature, density and/or wood moisture content are recorded.

## Revendications

1. Composant structurel de véhicule (100) en bois, avec un corps de base allongé (110) en bois massif (V) qui présente au moins une zone d'introduction de force (111, 112) formée par compression locale du bois massif (V) et une résistance plus élevée, dans lequel au moins une transition entre cette zone d'introduction de force (111, 112) à résistance plus élevée et une zone voisine (114) à résistance plus faible est conçue en tant que zone de transition de résistance (115) avec une transition de résistance continue et/ou par paliers.

2. Composant structurel de véhicule (100) selon la revendication 1,
**caractérisé en ce que**
une transition de résistance continue et/ou par paliers est conçue dans la zone de transition de résistance (115) par adaptation géométrique et/ou par adaptation de la structure en bois.

3. Composant structurel de véhicule (100) selon l'une quelconque des revendications précédentes,
**caractérisé en ce que**
la zone d'introduction de force (111, 112) et la zone de transition de résistance (115) sont produites par application d'une pression extérieure (P).

4. Composant structurel de véhicule (100) selon l'une quelconque des revendications précédentes,
**caractérisé en ce que**
la zone d'introduction de force (111, 112) présente au moins un trou (113) y étant formé.

5. Composant structurel de véhicule (100) selon l'une quelconque des revendications précédentes,
**caractérisé en ce que**
des éléments fonctionnels supplémentaires (120) créés par injection directe d'un plastique sont disposés sur le corps de base (110).

6. Composant structurel de véhicule (100) selon l'une quelconque des revendications précédentes,
**caractérisé en ce que**
celui-ci est conçu en tant que traverse de tableau de bord d'un véhicule à moteur.

7. Procédé de fabrication d'un composant structurel de véhicule (100) en bois qui présente un corps de base allongé (110) en bois massif (V) avec au moins une zone d'introduction de force (111, 112) à résistance plus élevée formée par compression locale du bois massif (V), dans lequel le procédé comprend les étapes suivantes :
- fourniture d'une pièce de bois allongée préfabriquée (10) en bois massif (V), à partir de laquelle le corps de base (110) doit être fabriqué ;
- création de la zone d'introduction de force (111, 112) en appliquant une pression extérieure (P), moyennant quoi le bois massif (V) est comprimé dans la zone concernée (11, 12) et sa résistance est ainsi augmentée.

8. Procédé selon la revendication 7,
**caractérisé en ce que**
au moins une zone (11, 12) de la pièce de bois (10) correspondant à la zone d'introduction de force (111, 112) est traitée avec une substance d'imprégnation (S) avant la compression.

9. Procédé selon la revendication 7 ou 8,
**caractérisé en ce que**
la pièce de bois (10) fournie est contrôlée, au moins dans une zone (11, 12) correspondant à la zone d'introduction de force (111, 112), et le processus d'imprégnation et/ou le processus de compression est commandé sur la base de valeurs ainsi détectées.

10. Procédé selon la revendication 9,
**caractérisé en ce que**
lors du contrôle de la pièce de bois (10), son fibrage, sa température, sa densité et/ou son humidité du bois est détecté.
